**Europäisches Patentamt**

**European Patent Office**

**Office européen des brevets**

(19)

(11) Numéro de publication: **0 006 389**
**B1**

(12) **FASCICULE DE BREVET EUROPEEN**

(45) Date de publication du fascicule de brevet: **02.09.81**

(51) Int. Cl.³: **B 23 K 9/02**

(21) Numéro de dépôt: **79400402.8**

(22) Date de dépôt: **19.06.79**

(54) **Procédé et dispositif de suivi automatique de joints à souder.**

(30) Priorité: **19.06.78 FR 7818239**

(43) Date de publication de la demande:
**09.01.80 Bulletin 80/1**

(45) Mention de la délivrance du brevet:
**02.09.81 Bulletin 81/35**

(84) Etats Contractants Désignés:
**AT BE CH DE FR GB IT LU NL SE**

(56) Documents cités:
**DE - A - 2 100 595**
**FR - A - 2 340 795**
**US - A - 2 490 024**

(73) Titulaire: **LA SOUDURE AUTOGENE FRANCAISE**
**75, Quai d'Orsay**
**F-75321 Paris Cedex 07 (FR)**

(72) Inventeur: **Tanguy, Jean-Jacques**
**50, avenue de Poissy**
**F-78260 Acheres (FR)**

(74) Mandataire: **Leclercq, Maurice et al,**
**L'AIR LIQUIDE SOCIETE ANONYME POUR**
**L'ETUDE ET L'EXPLOITATION DES PROCEDES**
**GEORGES CLAUDE 75, Quai d'Orsay**
**F-75321 Paris Cedex 7 (FR)**

Courier Press, Leamington Spa, England.

Procédé et dispositif de suivi automatique de joints à souder

L'invention concerne un procédé et un dispositif de suivi automatique de joints à souder et concerne plus particulièrement des joints substantiellement linéaires, du genre où un éventuel décalage entre ledit joint et un moyen de guidage d'un chariot de torche de soudage est compensé par un déplacement correctif transversal d'un support de torche, monté à coulissement transversal sur ledit chariot de torche, selon lequel le déplacement correctif transversal est assuré dans une plage de réglage autorisée par une commande asservie à un palpage mécanique dudit joint, au moyen d'un doigt de palpage.

Cette façon de faire, où le doigt de palpage suit le joint en permanence, est vouée à l'échec lorsque les pièces à assembler sont préalablement solidarisées entre elles par de petits points de soudure, dont la longueur est de l'ordre de 5 à 30 mm qui permettent d'assurer une position correcte des pièces pour l'opération ultérieure de soudage proprement dite. En effet, le doigt de palpage, lorsqu'il rencontre un tel point de soudure, s'échappe du joint et transmet des informations totalement erronées interdisant la poursuite correcte de l'opération de soudage.

Cette façon de faire intéresse essentiellement, bien entendu, des pièces de grandes dimensions et la présente invention a pour but de porter remède à l'inconvénient qui vient d'être signalé, exclusivement dans le cas de pièces à assembler selon des joints qui ont des extensions substantiellement linéaires selon de grandes distances.

Selon l'invention, on assure cette commande en procédant périodiquement à des avances transversales d'un doigt palpage de joint rétractable, normalement en position rétractée écartée dudit joint, ladite commande étant rendue inopérante dans tous les cas où l'information donnée par une telle opération de palpage se situe en dehors de ladite plage de réglage autorisée, traduisant ainsi la présence d'un point de soudure effectué préalablement à l'opération de soudage proprement dite, et en renouvelant immédiatement ladite opération de palpage jusqu'à obtention d'une information située dans ladite plage de réglage autorisée. Ainsi, en renonçant au palpage permanent du joint à souder et en lui substituant un palpage periodiquement effectué assortie d'un renouvellement de palpage en cas d'anomalie, on résoud très simplement et très efficacement le problème du suivi de joint de pièces à assembler le long de joints linéaires et qui ont été préalablement "pointés", c'est-à-dire solidarisés par quelques points de soudure.

L'invention concerne également un dispositif suivi de joint destiné à mettre en oeuvre le procédé rappelé ci-dessus et qui est du genre comprenant, sur un chariot-support de torche, un équipage mobile transversalement, comprenant un doigt le palpage de joint et, selon l'invention, ce doigt de palpage de joint est situé en bout d'une tige montée à coulissement à ressort dans un coulisseau lui-même solidaire d'un axe de vérin à double effet, la tige de palpage étant associée à des moyens de détection de sa position par rapport audit coulisseau.

Selon une forme avantageuse de réalisation, les moyens de détection de la position de la tige de palpage comportent une tige à crémaillère coopérant avec un pignon dont l'axe commande un curseur de potentiomètre, ledit potentiomètre étant associé à des moyens électroniques de commande d'un moteur de réglage en position transversale, via un moyen d'interruption d'opération mis en action par un détecteur d'un signal de commande hors d'une plage de réglage autorisée.

Les caractéristiques et avantages de l'invention ressortiront d'ailleurs de la description qui suit en référence aux dessins annexé, dans lesquels:

— la figure 1 est une vue éclatée en perspective d'une installation de soudage selon l'invention;

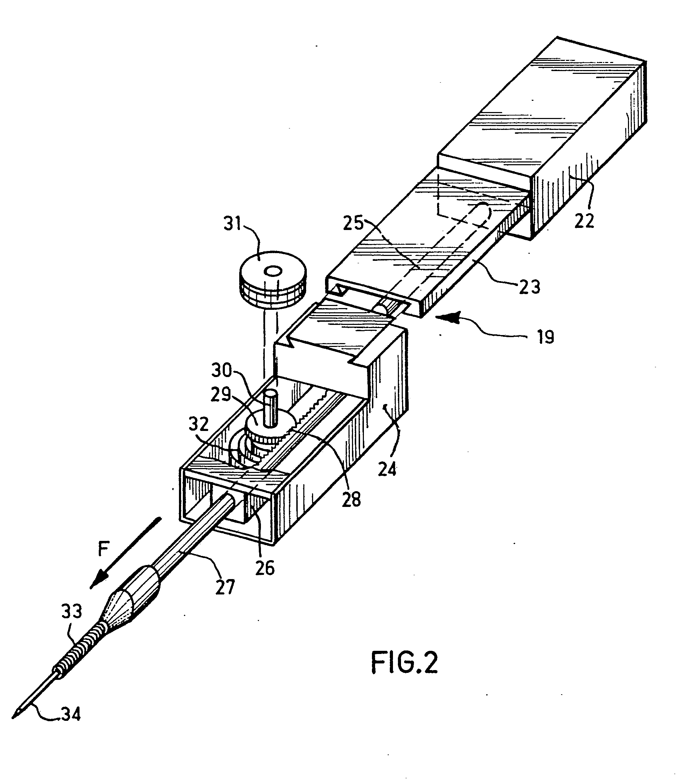

— la figure 2 est une vue éclatée en perspective d'un détail de la figure 1;

— la figure 3 est une vue très schématique du dispositif électronique de commande.

En se référant aux dessins annexés, une installation de soudage selon l'invention est ici appliquée au soudage à clin d'une plaque de tôle 1 sur une face plane 3 d'un tube support 2 selon un joint de soudage 4 substantiellement linéaire représenté par l'axe YY', le soudage étant destiné à s'effectuer de Y vers Y'. De façon usuelle, des points de soudure, tels que 5 ont été préalablement effectués le long du joint 4 de façon à maintenir, en position relativement correcte, les pièces à assembler 1 et 2.

Un ensemble mobile de soudage est solidaire d'un chariot 10 qui, par des moyens non représentés, est monté à coulissement selon un axe XX'. Au moment de la mise en place des pièces à assembler, on s'arrange pour que les axes XX' et YY' soient aussi parallèles que possible l'un par rapport à l'autre, mais bien entendu, ceci est impossible et il subsiste certains défauts de parallèlisme entre la ligne de joint YY' et l'axe XX', du guide de chariot de torche 10, ne serait-ce que parce que le bord 6 de la plaque de tôle 1 definissant le joint 4 n'est pas rigoureusement linéaire.

Sur ce chariot principal 10, à coulissement longitudinal, est monté un chariot désigné globalement par le chiffre de référence 11 et qui est monté à coulissement transversal selon l'axe ZZ' qui est rigoureusement perpendiculaire à l'axe XX'. Ce chariot 11 est monté à déplacement selon l'axe ZZ', grâce à un coulisseau 12 monté sur une tige filetée 13, elle-même solidaire d'un moteur de réglage 14. Le coulisseau 12 porte, par l'intermédiaire des tubes supports 15 et 16 d'une part, une torche de soudage 18 fixée par un moyen de solidarisation 17, d'autre part, un dispositif de palpage 19 monté sur un pivot longitudinal 20. Le dispositif de palpage 19 comporte essentiellement un vérin pneumatique à double effet 22 solidaire en position par rapport au pivot 20 et dont le corps se prolonge par une glissière transversale 23. Cette glissière transversale 23 porte un coulisseau à déplacement tansversal 24 qui est soumis à l'action d'une tige 25 du vérin 22. Ce coulisseau 24 porte, dans des paliers, dont un est représenté en 26, une tige de palpage 27 à crémaillère 28 coopérant avec un pignon 29 dont un axe 30 porte le curseur d'un potentiomètre 31. Un ressort de rappel 32 tend à ramener systématiquement la tige 27 dans la direction représentée à la flèche F, c'est-à-dire à faire sortir, jusqu'à une butée non représentée, la tige 27 vers l'avant et en dehors du coulisseau 24. Cette tige 27 porte, par l'intermédiaire d'une articulation à ressort 33, un doigt de palpage 34. Ainsi qu'on le voit aux dessins, l'ensemble de palpage est monté en articulation dans un plan vertical, grâce à un collier 35.

On va maintenant détailler, dans un premier temps, un fonctionnement partiel du dispositif mécanique décrit et l'on verra plus loin comment ce fonctionnement peut être réalisé, à titre d'exemple, avec la coopération d'un dispositif électronique.

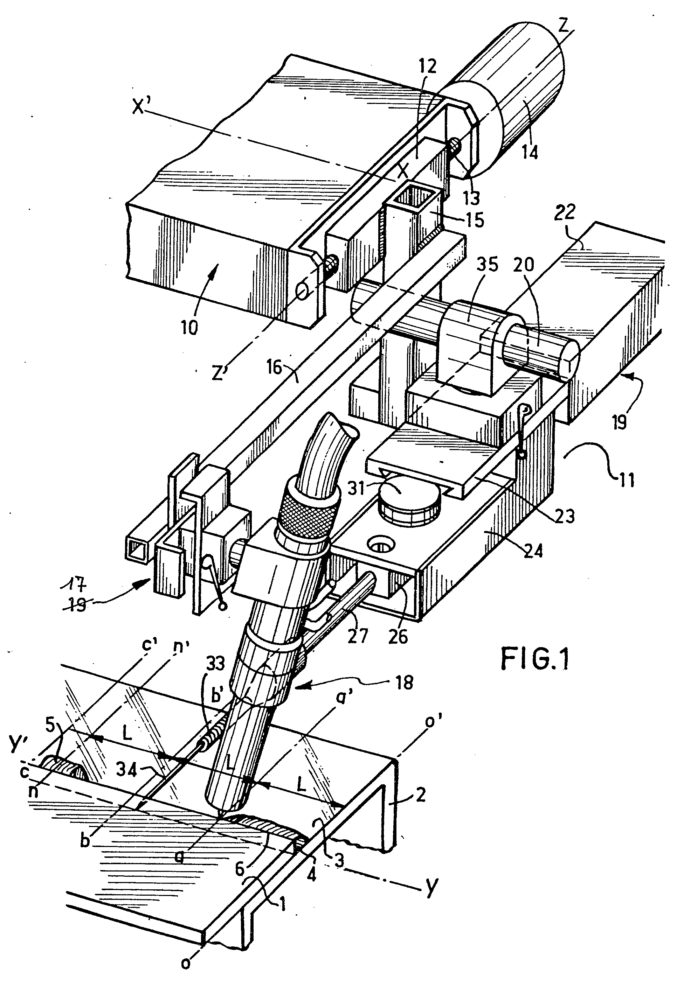

Au départ, l'ensemble est amené dans une disposition d'extrémité de joint oo' et la torche de soudage 18, placée en position correcte de travail grâce au moyen de réglage manuel 17 et le réglage au zéro du potentiomètre 31 se fait automatiquement par action sur le moteur 14, opération au cours de laquelle l'ensemble coulisseau 24 et tige de palpage 27—34, qui était en position rétractée — non représentée au dessin (position dans laquelle la tige de palpage 34 est largement écartée du joint 4, mais est inclinée de façon à ce que son axe rencontre le joint à suivre 4) vient buter au fond du joint 4. Une fois que ces préparatifs sont terminés, le dispositif est mis en route et le soudage est entrepris, le tout de façon que le moteur de réglage 14 compense toute différence de position de curseur de potentiomètre 31 par rapport à la position de référence qui est celle de départ (position oo'). On comprend donc qu'au cours des différents palpages qui sont effectués selon les positions aa', bb', cc', la torche 18 sera chaque fois ramenée en position correcte de soudage. Il y a lieu de noter que le zéro du curseur de potentiomètre reste inchangé car les différentes corrections transversales effectuées par le moteur 14 se répercutent sur la position spatiale du vérin 22 en entraînant un déplacement corrélatif du potentiomètre. L'intérêt essentiel du procédé selon le dispositif décrit réside dans le fait que des moyens sont prévus pour répéter l'opération de mesure si, pour une raison quelconque, la position du curseur se situait, en fin de course, en dehors d'une zone prédéterminée de réglage de portée limitée. Une telle situation peut en effet se produire si l'opération de palpage s'effectuait au droit d'un point de soudage 5, auquel cas, le doigt de palpage 34 glisserait le long du point de soudage 5, au-dessus du point de soudage 5 et s'échapperait sur la surface de la pièce à souder 11 grâce à l'articulation de ressort 33 qui le relie à la tige de palpage 27. Ainsi, lorsqu'une longueur de soudage a été réalisée, par exemple entre les positions oo' et aa', le vérin pneumatique 22 est mis en action et le coulisseau 24 est avancé, ce qui amène le doigt de palpage 34 à venir en contact avec le joint à suivre 4 comme représenté à la figure 1. Cette prise de contact est faite d'ailleurs à une distance longitudinale relativement faible et en avance de la torche de travail 18. Une fois que le doigt de palpage 34 vient en position, au creux du joint à suivre 4, il est immobilisé en position et le coulisseau 24 poursuit son mouvement d'avance jusqu'à une position prédéterminée, toujours la même, par rapport à l'axe de pivot 20.

Grâce à la crémaillère 28, le curseur du potentiomètre 31 se déplace d'une position angulaire qui est fonction directe de la position d'impact du doigt de palpage 34 au fond du joint 4. Il est bien clair que si cette position est rigoureusement la même que celle que l'on avait rencontrée au départ en position oo' ou lors d'un palpage précédent, le curseur de potentiomètre 31 se retrouve également dans la même position et l'information que cette position donne est la même que celle qu'on avait déterminée en position de départ oó ou lors dudit palpage précédent, en sorte que les moyens de commande électroniques, décrits succinctement par la suite, permettront de donner un ordre de non-changement de position, c'est-à-dire que le moteur de réglage 14 ne serait alimenté ni dans un sens, ni dans un autre. Si, au contraire, le point d'impact du doigt de palpage 34 est tel qu'il y a un léger écart, dû par exemple à un décalage angulaire entre l'axe YY' du joint 4 et l'axe XX' du chariot de torche, la position du curseur du potentiomètre 31 se trouve être différente de celle occupée dans la position oo' ou lors d'un palpage précédent, et une information est donnée conduisant à provoquer une alimentation correctrice du moteur de réglage 14. Quelques secondes après, c'est-à-dire lorsque le cordon de soudure s'est allongé d'une distance prédéterminée — généralement de l'ordre de 10 à 30 cm — une nouvelle opération de palpage se produit à la position bb', puis cc', etc..., chacun provoquant, le cas échéant, un déplacement correcteur par le moteur 14. Si l'une de ces opérations de palpage se produisait au niveau du point de soudure 5, comme représenté en nn' au dessin, le doigt de palpage 34 s'échapperait au-dessus de la plaque à souder 1 et le curseur de potentiomètre 31 se situerait très largement en dehors de la plage de réglage autorisée. Aucune commande n'est alors transmise au moteur de réglage 14 et, immédiatement après, une opération de palpage correct se renouvelle telle que celle représentée en cc'.

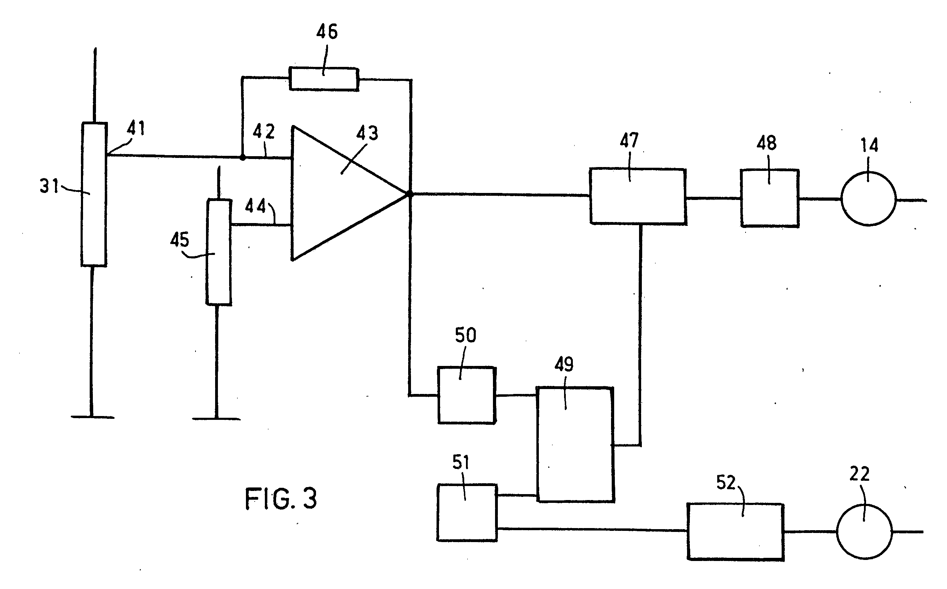

On a représenté à la figure 3 très schématiquement et à titre d'exemple un dispositif électronique pouvant être associé au dispositif de palpage selon l'invention. Ce dispositif comprend le potentiomètre 31 dont le curseur 41 est raccordé à une entrée 42 d'un comparateur 43 dont une autre entrée 44 est raccordée à un potentiomètre de réglage de zéro initial 45 (réglé de façon que, dans la position oo' rencontrée précédemment, le comparateur 43 fournisse une grandeur de sortie nulle). Un potentiomètre de réglage de gain 46 permet de choisir la plage de réglage où toute information est transmise.

En général, l'information donnée par le comparateur 43 est transmise, via un interrupteur électronique 47 et un amplificateur 48 au moteur correcteur 14. Cet interrupteur électronique 47 est cependant asservi à un circuit logique de commande 49, lui-même dépendant d'une part d'un dispositif de détection 50 de l'échappement du doigt de palpage provoquant la fermeture de l'interrupteur 47 lorsque la grandeur de sortie du comparateur 43 est supérieure à une valeur limite (traduisant l'échappement du doigt de palpage hors du joint à suivre 4), d'autre part, d'un dispositif de cadencement de palpage 51, permettant non seulement la mise en oeuvre du moteur de palpage 22 via un amplificateur hydraulique 52 mais également la transmission de la mesure effectuée via l'interrupteur 47.

L'invention s'applique au soudage automatique le long de joints à extension substantiellement linéaire, et par ces termes, on entend des joints droits et également des joints courbés mais à courbures relativement faibles, étant entendu que l'on déterminera la fréquence de palpage en sorte que la correction maximale, au regard du guide porte-torche, se situe dans la gamme possible de réglage correctif.

## Revendications

1. Procédé de suive automatique de joint à souder (4), du genre où un éventuel décalage entre ledit joint (4) et un moyen de guidage d'un chariot de torche (10) de soudage est compensé par un déplacement correctif transversal d'un support de torche (16), monté à coulissement transversal sur ledit chariot de torche, selon lequel le déplacement correctif transversal est assuré dans une plage de réglage autorisée par une commande asservie à un palpage mécanique dudit joint, au moyen d'un doigt de palpage (34), caractérisé en ce qu'on assure cette commande en procédant périodiquement à des avances transversales d'un doigt de palpage de joint rétractable, normalement en position rétractée écartée dudit joint, ladite commande étant rendue inopérante dans tous les cas où l'information donnée par une telle opération de palpage se situe en dehors de ladite plage de réglage autorisée, traduisant ainsi la présence d'un point de soudure (5) effectué préalablement à l'opération de soudage proprement dite, et en renouvelant immédiatement ladite opération de palpage jusqu'à obtention d'une information située dans ladite plage de réglage autorisée.

2. Procédé de suivi de joints à souder selon la revendication 1, caractérisé en ce que l'opération de palpage permet la détection d'une position d'un curseur de potentiomètre (31) asservie à la position de butée du doigt de palpage (34), telle que si le curseur de potentiomètre se situe en dehors d'une plage normale de positions, aucune information de correction n'est transmise et l'opération de palpage est renouvelée très peu de temps après la précédente.

3. Dispositif de suivi de joint pour la mise en oeuvre du procédé de suivi de joint selon la revendication 1, du genre comprenant, sur un chariot support de torche (10), un dispositif de palpage mobile transversalement (19) comprenant un doigt de palpage de joint (34), caractérisé en ce que ledit doigt de palpage de joint (34) est situé en bout d'une tige (27) montée à coulissement à ressort dans un coulisseau (24) lui-même solidaire d'un axe de vérin à double effet (22), la tige de palpage (27) étant associée à des moyens de détection de sa position (28—29—30—31) par rapport audit coulisseau.

4. Dispositif de suivi de joints selon la revendication 3, du genre où les moyens de détection de la position de la tige de palpage comportent une tige (27) à crémaillère (28) coopérant avec un pignon (29), caractérisé en ce que l'axe de pignon (30) commande un curseur d'un potentiomètre (31), ledit potentiomètre (31) étant associé à des moyens électroniques (43—48—14) de commande d'un moteur de réglage en position transversale, via un moyen d'interruption d'opération (47) de réglage mis en action par un détecteur (50) d'un signal de commande hors d'une plage de réglage autorisée.

## Patentansprüche

1. Verfahren zum automatischen Nachfahrung einer zu schweißenden Naht (4), bei welchem eine mögliche Verschiebung zwischen dieser Naht (4) und einer Führungseinrichtung für einen Wagen (10) für einen Schweißbrenner durch eine Querkorrekturverschiebung eines Brennerträgers (16) ausgeglichen wird, der quer gleitend auf dem Brennerwagen angebracht ist, nach welchem die Querkorrekturverschiebung in einem zulässigen Regelbereich durch eine von einem mechanischen Abtasten dieser Naht abhängigen Steuern mittels eines Abtastfingers (34) sichergestellt wird, dadurch gekennzeichnet, daß diese Steuerung dadurch sichergestellt wird, daß sie periodisch mit dem Vorlauf eines zurückziehbaren Abtastfingers für die Naht verfährt, wobei sich dieser Finger normalerweise in einer zurückgezogenen Stellung entfernt von der Naht befindet, daß die Steuerung in allen jenen Fällen unwirksam gemacht wird, bei welchen die durch einen solchen Abtastbetrieb gegebene Information sich außerhalb des zulässigen Regelbereiches befindet, wodurch das Vorhandensein eines Schweißpunktes (5) übermittelt wird, der vor dem richtigen Schweißen geschaffen worden ist, und daß dieses Abtasten unmittelbar wiederholt wird, bis eine Information erhalten wird, die innerhalb dieses zulässigen Regelbereiches angeordnet ist.

2. Verfahren nach Anspruch 1, dadurch gekennzeichnet, daß durch den Abtastbetrieb das Erfassen oder Anzeigen einer Position eines Läufers oder Schiebers eines Potentiometers (31) in Abhängigkeit von der Stellung des Anschlages des Abtastfingers (34) erlaubt ist, so daß wenn der Läufer des Potentiometers sich außerhalb eines normalen Bereiches von Stellungen befindet, eine Korrekturinformation nicht übermittelt wird und das Abtasten sehr kurz nach dem vorhergehenden Abtasten wiederholt wird.

3. Vorrichtung zur Durchführung des Verfahrens nach Anspruch 1, bei welcher auf einem Brennerträgerwagen (10) eine quer bewegliche Abtastvorrichtung (19) vorgesehen ist, die einen Abtastfinger (34) für die Naht (4) aufweist, dadurch gekennzeichnet, daß der Abtastfinger (34) für die Naht sich am Ende einer Stange (27) befindet, die zum Gleiten mit einer Feder in einem Schlitten (24) angebracht ist, welcher selbst formschlüssig mit einer Achse eines pneumatischen Doppelantriebes (22) verbunden ist, daß die Abtaststange (27) Anzeigemitteln für ihre Stellung (28—29—30—31) bezüglich des Schlittens zugeordnet ist.

4. Vorrichtung nach Anspruch 3, bei der die Anzeigemittel für die Stellung der Abtaststange eine Zahnstange (28) aufweisen, die mit einem Ritzel (29) zusammenwirken, dadurch gekennzeichnet, daß die Achse des Ritzels (30) einen Läufer eines Potentiometers (31) steuert und daß das Potentiometer (31) elektronischen Steuermitteln (43—48—14) für einen Motor zum Regeln in Querposition zugeordnet ist, und zwar über ein Mittel (47) zum Unterbrechen des Regelns bzw. Steuerns, wobei das Mittel durch ein Anzeigegerät (50) eines Steuersignals außerhalb eines zulässigen Regelbereiches in Tätigkeit gebracht wird.

**Claims**

1. A method for automatically following a welding seam (4), of the kind in which a possible shift between the said seam (4) and a means for guiding a welding torch carriage (10) is compensated by a corrective transverse displacement of a torch carriage, according to which the corrective displacement is assured within a range of adjustment authorised by a control system positively coupled with mechanical probing of the said seam by means of a feeler probe (34), characterised in that this control operation is assured by periodic performance of transverse advances of a retractable seam feeler probe, which is normally in the retracted position spaced apart from the said seam, the said control action being rendered inoperative in all cases in which the information provided by such a probing operation does not lie within the said authorised range of adjustment, thus manifesting the presence of a welding spot (5) produced prior to the welding operation as such, and in that the said probing operation is resumed immediately until information is obtained which lies within the said authorised range of adjustment.

2. A method of following seams to be welded, according to claim 1, characterised in that the probing operation allows the detection of a position of a potentiometer cursor (31) positively linked to the position of abutment of the feeler probe (34), such that if the potentiometer cursor is situated outside a normal range of positions no corrective datum is transmitted and the probing operation is resumed very shortly after the preceding one.

3. A device for following a seam for application of the seam following method according to claim 1, of the kind which comprises on a torch bearing carriage (10) a transversely movable probing device (19) comprising a seam feeler probe (34) characterised in that the said seam feeler probe (34) is situated at the end of a rod (27) which is slidably mounted under the urge of spring means in a slider (24) itself unitary with the spindle of a double-action ram (22), the probing rod (27) being associated with means of detecting its position (28—29—30—31) with respect to the said slider.

4. A device for following seams according to claim 3, of the kind in which the means of detecting the position of the probing rod comprise a bar (27) incorporating a toothed rack (28) co-operating with a pinion (29), characterised in that the pinion spindle (30) operates a cursor of a potentiometer (31), the said potentiometer (31) being associated with means (43—48—14) for electronically controlling a transverse position setting motor via a means (47) of interrupting a control operation which is placed in action by a detector (50) of a control signal lying outside an authorised range of adjustment.

**FIG.1**

FIG.2

FIG. 3